**Europäisches Patentamt**

(19) **European Patent Office**

**Office européen des brevets**

(11) Publication number : **0 287 610 B1**

(12) # EUROPEAN PATENT SPECIFICATION

(45) Date of publication of patent specification :
22.04.92 Bulletin 92/17

(51) Int. Cl.[5] : **A23L 1/025, A23L 3/00**

(21) Application number : **87906739.5**

(22) Date of filing : **02.10.87**

(86) International application number :
**PCT/DK87/00119**

(87) International publication number :
**WO 88/02222 07.04.88 Gazette 88/08**

(54) **METHOD AND OVEN FOR THE HEAT CURING OF RAW MEAT PRODUCTS.**

(30) Priority : **02.10.86 DK 4718/86**

(43) Date of publication of application :
**26.10.88 Bulletin 88/43**

(45) Publication of the grant of the patent :
**22.04.92 Bulletin 92/17**

(84) Designated Contracting States :
**AT BE CH DE FR GB IT LI LU NL SE**

(56) References cited :
**CH-A- 595 054**
**US-A- 2 938 804**
**US-A- 4 237 145**
**US-A- 4 366 177**
**US-A- 4 560 567**
**Patent Abstracts of Japan, Vol. 5, no. 16C41, abstract of JP 55-144859, publ 1980-11-12**
**Patent Abstracts of Japan, vol. 6, no. 191C127, abstract of JP 57-105147, publ. 1982-06-30**

(73) Proprietor : **Tulip International A/S
Gunnar Clausens Vej 13
DK-8260 Viby J (DK)**

(72) Inventor : **JENSEN, Hans, Christian, Schlünzen
Loget Hoj 8 B, 2.tv.
DK-7100 Vejle (DK)**
Inventor : **PEDERSEN, Henning
Gormsvej 8
DK-7080 Borkop (DK)**

(74) Representative : **Larsen, Hans Ole et al
Larsen & Birkeholm ApS, Europaeisk
Patentbureau, Skagensgade 64, P.O.Box 200
DK-2630 Taastrup (DK)**

Jouve, 18, rue Saint-Denis, 75001 PARIS

## Description

The invention relates to a method for the heat curing of raw meat products, such as meat, meat offal, fish and like raw materials where the product is conveyed through at least one electromagnetic field with a frequency of less than 300 MHz produced by at least one pair of electrodes in order for the medium to be heated.

The invention also relates to an oven for carrying out the method, the said oven having guide means which carry the said product through at least one pair of electromagnetic electrodes, where the electrodes of a pair are arranged on opposite sides of the guide means.

Heating or boiling of protein-containing meat products, such as forcemeat for the production of meat products, luncheon meat and like products is usually a slow process. The temperature of the raw meat product is maximum 4°C at the beginning of the boiling, and it must be heated to a minimum of approximately 70°C and a maximum of approximately 95°C at the most in order to have been heated sufficiently, which will typically take about 4-6 hours. This slow heating time means that the production must be carefully adjusted which makes the operation rigid and inexpedient.

Add to this that the finished product is not always of the desired quality because the long heating time means that fat and stock is boiled out and accumulates along the surface where it congeals after cooling. The finished article is hereby given an undesirable appearance and the taste is impaired due to the heterogenous mixture of components of the finished product.

Moreover, the size and shape of the finished product are limited by the packing, and the shape and size of the product can therefore only be changed at considerable costs. Thus, a large stock and a varied number of moulds are required in order to satisfy the demand for the various finished products.

In order to remedy these disadvantages a method of the type mentioned in the preamble is known from CH patent no. 595,054, which method is applied for uniform heating of organic products such as various foodstuffs being packed in separate containers prior to the application of the method.

Problems with heating hereby occur in that the containers contain gas, such as air, above the surface of the products, which gas by heating with a high-frequency electromagnetic field will give rise to discharges.

According to the patent this problem is overcome, if the containers are submerged in a liquid having a dielectric constant corresponding to that of the product, whereby the surface of the product is held at a particular height relative to the surface of the said liquid. For sterilization of the gas contained in the containers above the product, the said gas also containing polluting microorganisms, a parabola is moreover provided above the containers for emission of an ultrahighfrequency electromagnetic radiation of a frequency of for instance 2.450 Gc.

The liquid is preferably water, which, however, in order to have a sufficiently low dielectric constant must be demineralized or distilled.

Furthermore, the water should be constantly purified in order to maintain this low dielectric constant.

A method is furthermore known from US patent no. 4,560,567 and the corresponding Norwegian printed specification no. 154,155, which comprises the conveyancing of a finely divided meat or fish medium under pressure through a heat curing chamber where the medium is heated to approximately 140°C for a few minutes, and sterilized. The medium is then pumped through a forming pipe in which it is subjected to heating and subsequent cooling, respectively, before it is pressed into a mould. The mould is provided with a valve at the outlet end and a cutting and stop plate, respectively, which ensure that the medium is adequately compressed in order that it can maintain its shape before it is finally discharged into a packing.

This method is, however, inconvenient and therefore uneconomic in that it partly causes certain disadvantages by the curing, and partly presupposes the use of expensive and complex equipment. Thus, heating to 140°C causes steam formations in the medium which must therefore be subjected to a considerable pump pressure in order to expel the steam. This partly requires a great pump power and partly that there is a backstop in the pipe, in this case by way of a valve.

Heating by steam also results in that heating must take place over a long period before the centre of the product has reached the correct temperature. The outer layer is, however, constantly exposed to a high temperature which makes the method unsuited for meat products, the reason being that fat and stock during this long period will boil out and accumulate along the surface of the product. On discharge from the tube, the product is cut and inserted piece by piece in the containers. The heat curing chamber and the forming tube cannot be replaced which means that this known method forces one to apply the initially chosen dimensions.

Add to this that at least two and preferably three temperature zones are required in the pipe, of which the zone closest to the outlet is a cooling zone. Finally, it is briefly mentioned that the heating can take place by means of a high-frequency electromagnetic field; how this is done is not mentioned, however.

From US patent no. 4,366,177 there is known a method for broiling or baking meat products containing grease. The meat products are conveyed on a conveyor belt through an oven and are cooked by means of infrared heat emitted from filament plates or elements which are brought to glow by gas or electric heating. Hence, the patent does not relate to heating by high-frequency electromagnetic radiation while a food product is conveyed through an oven prior to packing of the product.

Based on this known prior art and the disadvantages involved, the object of the invention is to provide a method by which a uniform heating of a medium is obtained without the occurrence of such steam pockets during the heating which might influence the homogeneity of the finished product.

This object is obtained by a method of the initially mentioned type, the method according to the invention being characterized in that the medium is jumped through said electromagnetic field by means of a pipe being provided with said pairs of electrodes, and in that any air is evacuated from the medium prior to the heating.

A considerable simplification and flexibility of the production is hereby obtained, first and foremost because a continuous production can take place in that the meat medium can be pumped and therefore can be conveyed by means of a pump. The velocity of the meat medium is in correspondence with the medium being heated by the electromagnetic field in order that it reaches the required temperature in its entire cross section during the passage. This takes a few minutes as opposed to the hitherto known long boiling and heating times. The penetration depth of the applied electromagnetic waves is by the comparatively high frequency so large that meat media with a thickness of up to about 15 cm can be heat cured within this time interval.

Due on the one hand to the evacuation of air from the medium and on the other hand to the pressure in the pipe, steam pockets are avoided in the medium during heating.

Moreover, the method makes it possible to change the cross section and size of the finished product in that this can take place by the use of conveyancing pipes with suitable cross sectional shape. This reduces the demand for different boiling containers just as it contributes to a considerable increase in production in that the cumbersome packing prior to the boiling can be dispensed with.

To this must be added that the quality of the finished product is much better since the short heating time does not make the fat or stock boil out whereas it stays inside the product making the product homogeneous. This makes the product more attractive, and the taste is improved by the uniform distribution of the ingredients.

By, as related to in claim 2, cutting and at choice storing the hot product immediately on leaving the oven, it is possible to store aseptically in for instance transparent containers which gives considerable advantages productionwise but also for the consumer who is now able to see the product.

As previously mentioned, the invention also relates to an oven to be used for carrying out the method, the said oven being of the initially described type, whereby this oven according to the invention is characterized in that the said guide means consist of a pipe having a predetermined cross section, which pipe on diametrically opposing sides carries said pairs of electrodes, that the inlet end of said pipe is connected to a pump with a funnel, and that a connecting pipe is provided between said pump and said inlet end, if said connecting pipe being provided with a suction pipe connected to an air suction source.

The subclaims relate to embodiments of the oven whereby the expediency of these embodiments will be evident from the subsequent detailed description.

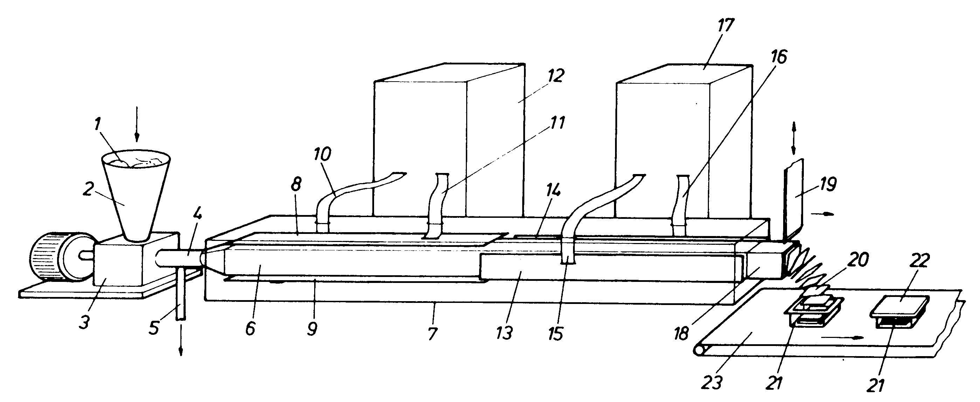

In the following the invention will be described in closer detail with reference to the drawing which shows an embodiment of an oven for carrying out the method.

As shown in the drawing the oven comprises a funnel or silo 2 into which the raw meat medium 1 is poured.

In connection herewith there is arranged a pump 3 which in a generally known manner can pump the raw product 1 into a connecting pipe 4. To this connecting pipe 4 there is connected a suction pipe 5 into which air can be sucked from the raw product, if so required, prior to the product being heat cured in order that air pockets do not occur in the finished product.

A pipe 6 is connected to the connecting pipe 4 which can carry the raw product through the heating section. The pipe 6 is manufactured of a material which allows electromagnetic waves to pass and has a small dielectric loss.

The pipe can for instance be made of plastic and have a wall thickness of 1 cm, an inner square cross section with a side length of 8 cm, and a suitable length.

In the shown example, two pairs of plate electrodes 8, 9 and 13, 14 are arranged around this pipe 6, said pairs being displaced 90° to each other. The electrodes can be made of an aluminium plate and be of a length corresponding to that of the pipe 6.

If exactly two pairs of electrodes are not required, this can be changed either by using only one pair or by increasing the number by further pairs.

The individual electrodes of each pair are electrically connected by cables 10, 11, 15, 16 to a generator 12, 17. Each generator is a frequency generator of a generally known type which may have an output power of approximately 20 kW. The frequency can be between 10 and 41 MHz, for instance 13,56 MHz, which tests have shown provides a suitable penetration depth.

The electrodes and the pipe is moreover enclosed in a steel plate cabinet 7 which partly protects the equipment and partly forms a screen for radiation.

By a meat medium whose starting temperature at the entrance of the pipe 6 is maximum 40°C and which must be heated through to approximately 80-90°C, about 300 kJ/kg meat medium must be added, said heating with a generator power of about 20 kW will take approximately 15 seconds per kilo meat medium.

The conveyancing speed through the pipe 6 must be adjusted accordingly, whereby a continuous heat curing of the meat medium can be carried out.

Once the heating has taken place, the meat medium has congealed and become solid in that it leaves the pipe as a rod of finished product 18 which is then cut and packed.

Cutting can take place by means of a generally known flying knife 19 which is used for cutting up the finished product into slices 20 or pieces.

The slices or pieces 20 are then placed in trays 21 on a suitable conveyer belt 23, and a lid 22 is put on which is sealed while the temperature of the slices 20 is still about 70°C.

When products of a different composition are to be produced, this mixture can be added to the plant which is then rearranged in accordance with the product in that fat and water content etc. have a different dielectric loss. Moreover, products having a different cross sectional shape can be produced in that the pipe 6 can be replaced by a pipe having a different cross section. In this manner it is possible quickly and easily to switch production to a different article and shape.

Furthermore, it will be easy to cut the finished article to any length; something which has so far not been possible.

The finished product will moreover be of an even better quality than has so far been produced, partly because fat and stock is distributed over the entire cross section of the product which improves the taste, and partly in that the article can be observed directly because the surface is free from any coatings.

Productionwise it is moreover an advantage that the package is no longer a limitation in that the production can be adapted to another package merely by adjusting the cutting and the shape of the product to the required packing.

## Claims

1. Method for the heat curing of raw meat products, such as meat, meat offal, fish and like raw materials where the medium (1) is conveyed through at least one electromagnetic field having a frequency of less than 300 MHz produced by at least one pair of electrodes in order for the medium (1) to be heated, **characterized** in that the medium (1) is pumped through said electromagnetic field by means of a pipe (6) being provided with said pairs of electrodes (8, 9; 13, 14), and in that any air is evacuated from the medium (1) prior to the heating.

2. Method according to claim 1, **characterized** in that the medium (1) is cut after heating and at choice is packed while still hot.

3. Oven to be used for carrying out the method according to claim 1, by which method raw meat products (1), such as meat, meat offal, fish and like raw materials are heated by an electromagnetic field having a frequency of less than 300 MHz, the said oven comprising guide means for carrying the medium (1) through at least one electromagnetic pair of electrodes, where said electrodes of the pair are arranged on opposite sides of said guide means, **characterized** in that the said guide means consist of a pipe (6) having a predetermined cross section, which pipe on diametrically opposing sides carries said pairs of electrodes (8, 9; 13, 14), that the inlet end of said pipe (6) is connected to a pump (3) provided with a funnel (2), and that a connecting pipe (4) is provided between said pump (3) and said inlet end, said connecting pipe being provided with a suction pipe (5) connected to an air suction source.

4. Oven according to claim 3, **characterized** in that the shape of the said pairs of electrodes (8, 9; 13, 14) corresponds to the outer shape of said pipe (6).

5. Oven according to any of the preceding claims where more than one pair of electromagnetic electrodes are provided on opposite sides of the guide means, **characterized** in that the said pairs of electrodes (8, 9; 13, 14) are angularly 90° displaced in pairs around the periphery and are displaced in pairs along said pipe (6).

6. Oven according to claim 5, **characterized** in that the pairs of electrodes (8, 9; 13, 14) can be supplied with varying frequencies and/or power.

## Revendications

1. Procédé pour le traitement à chaud de produits carnés crus tels que de la viande, des abats, du poisson et autres matières crues, dans lequel le milieu (1) est transporté à travers au moins un champ électromagnétique ayant une fréquence de moins de 300 MHz, produit par au moins une paire d'électrodes afin de chauffer le milieu (1), caractérisé en ce que le milieu (1) est pompé à travers ledit champ électromagnétique au moyen d'un conduit (6) pourvu desdites paires d'électrodes (8, 9 ; 13, 14), et en ce que tout air est évacué du milieu (1) avant le chauffage.

2. Procédé selon la revendication 1, caractérisé en ce que le milieu (1) est coupé après le chauffage et, optionnellement, est emballé encore chaud.

3. Four à utiliser pour la mise en oeuvre du procédé selon la revendication 1, procédé par lequel des produits carnés crus (1), tels que de la viande, des abats, du poisson et autres matières crues, sont chauffés par un champ électromagnétique ayant une fréquence de moins de 300 MHz, ledit four comportant des moyens de guidage destinés à transporter le milieu (1) à travers au moins une paire électromagnétique d'électrodes, où lesdites électrodes de la paire sont disposées sur des côtés opposés desdits moyens de guidage, caractérisé en ce que lesdits moyens de guidage comprennent un conduit (6) ayant une section transversale prédéterminée, lequel conduit porte, sur des côtés diamétralement opposés, lesdites paires d'électrodes (8, 9 ; 13, 14), en ce que l'extrémité d'entrée dudit conduit (6) est raccordée à une pompe (3) pourvue d'un entonnoir (2), et en ce qu'un conduit (4) de raccordement est prévu entre ladite pompe (3) et ladite extrémité d'entrée, ledit conduit de raccordement étant pourvu d'un conduit (5) d'aspiration raccordé à une source d'aspiration d'air.

4. Four selon la revendication 3, caractérisé en ce que la forme desdites paires d'électrodes (8, 9 ; 13, 14) correspond à la forme extérieure dudit conduit (6).

5. Four selon l'une quelconque des revendications précédentes, dans lequel plus d'une paire d'électrodes électromagnétiques sont prévues sur des côtés opposés des moyens de guidage, caractérisé en ce que lesdites paires d'électrodes (8, 9 ; 13, 14) sont décalées d'un angle de 90° par paires le long de la périphérie et sont décalées par paires le long dudit conduit (6).

6. Four selon la revendication 5, caractérisé en ce que les paires d'électrodes (8, 9 ; 13, 14) peuvent être alimentées sous des fréquences et/ou une puissance variables.

**Patentansprüche**

1. Verfahren zur Wärmebehandlung von Rohfleischprodukten, wie z. B. Fleisch, Fleischinnereien, Fisch und ähnliche Rohprodukte, wobei das Medium (1) durch zumindest ein elektromagnetisches Feld hindurchgefördert wird, das eine Frequenz von weniger als 300 MHz aufweist und von zumindest einem Paar Elektroden erzeugt wird zur Erwärmung des Mediums (1), **dadurch gekennzeichnet,** daß das Medium (1) durch das genannte elektromagnetische Feld durch ein Rohr (6) gepumpt wird, das mit dem genannten Elektrodenpaar (8,9; 13, 14) bestückt ist, und daß aus dem Medium (1) vor seiner Erwärmung alle Luft evakuiert wird.

2. Verfahren nach Anspruch 1, **dadurch gekennzeichnet,** daß das Medium (1) nach seiner Erwärmung geschnitten und wahlweise in noch heißem Zustand abgepackt wird.

3. Ofen zur Durchführung des Verfahrens nach Anspruch 1, bei welchem Verfahren Rohfleischprodukte (1), wie z. B. Fleisch, Fleischinnereien, Fisch und ähnliche Rohprodukte erwärmt werden durch ein elektromagnetisches Feld mit einer Frequenz von weniger als 300 MHz, wobei der genannte Ofen eine Führung aufweist zum Transport des Mediums (1) durch zumindest ein Paar elektromagnetischer Elektroden, die auf sich gegenüberliegenden Seiten der genannten Führung angeordnet sind, **dadurch gekennzeichnet,** daß die Führung aus einem Rohr (6) besteht, das einen vorbestimmten Querschnitt aufweist und auf sich diametral gegenüberliegenden Seiten das genannte Elektrodenpaar (8, 9; 13, 14) trägt, daß das Einlaßende des genannten Rohres (6) an einem mit einem Einfülltrichter (2) ausgerüstete Pumpe (3) angeschlossen ist, und daß zwischen Pumpe (3) und Einlaßende eine Verbindungsleitung (4) vorgesehen ist, die mit einer an eine Luftabsaugeinrichtung angeschlossenen Saugleitung (5) versehen ist.

4. Ofen nach Anspruch 3, **dadurch gekennzeichnet,** daß die Form des genannten Elektrodenpaares (8, 9; 13, 14) mit der Außenkontur des genannten Rohres (6) korrespondiert.

5. Ofen nach einem der vorhergehenden Ansprüche, mit mehr als einem Paar elektromagnetischer Elektroden auf sich gegenüberliegenden Seiten der Führung, **dadurch gekennzeichnet,** daß die genannten Elektrodenpaare (8, 9; 13, 14) in Paaren um 90 Umfangsgrad sowie entlang dem Rohr (6) gegeneinander versetzt angeordnet sind.

6. Ofen nach Anspruch 5, **dadurch gekennzeichnet,** daß die Elektrodenpaare (8, 9; 13, 14) mit sich ändernden Frequenzen und/oder Leistung beaufschlagbar sind.

EP 0 287 610 B1